# EUROPEAN PATENT APPLICATION

(11) **EP 1 670 242 A1**
(43) Date of publication of application: **14.06.2006**
(21) Application number: 05257640.2
(22) Date of filing: 13.12.2005
(51) Int. Cl.: H04N 5/445, H04N 5/782

(54) **Image display device and reservation recording method thereof**

(30) Priority: 13.12.2004 KR 2004104815
(71) Applicant: LG Electronics Inc., Yongdungpo-gu Seoul (KR)
(72) Inventor: Ahn, Jeong Eun 1009ho, 204dong, Buk-gu Daegu-shi Kyoungsang-do (KR)
(74) Representative: Camp, Ronald

(57) **Abstract**

According to a method of reservation recording, a broadcast program is received, and a recording command for the broadcast program is inputted. Next, an EPG is explored in response to the recording command and the EPG is checked to determine whether rebroadcasting is scheduled. After that, when rebroadcasting is scheduled in the EPG, reservation recording is set. If no rebroadcasting is scheduled, then the program being broadcast will be recorded.

## Description

The present invention relates to an image display device and a reservation recording method thereof. It more particularly relates to an image display device and a reservation recording method thereof, capable of recording a broadcast program currently being viewed, from the beginning.

Televisions (TVs) are devices for selecting broadcasting signal transmitted from a broadcasting station according to selection by a user to display a broadcast on a screen. As multimedia technologies develop, digital TVs are replacing analog TVs.

In particular, digital TVs can receive a variety of additional services such as home shopping, electronic newspapers, stock information, which cannot be received by prior art analog TVs. Also, digital TVs have many available reception channels thanks to the efficient use of broadcasting bandwidth.

A prior art image display device will be described below with reference to the drawings.

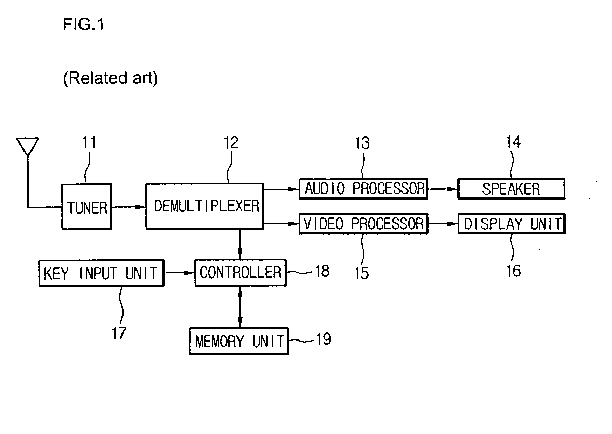

Fig. 1 is a block diagram of a prior art image display device.

As illustrated in Fig. 1, an image display device includes: a tuner 11 for selecting a broadcast signal; a demultiplexer 12 for separating the broadcast signal (i.e., transport stream multiplexed on a time base) selected by the tuner 11 into an audio signal, a video signal, and additional information; a video processor 15 processing the video signal separated by the demultiplexer 12 so that the video signal may be outputted through a display unit 16; an audio processor 13 processing the audio signal separated by the demultiplexer 12 so that the audio signal may be outputted through a speaker 14; a memory unit 19 for storing a broadcast program and an electronic program guide (EPG); a controller 18 for controlling operations of respective parts of the image display device, controlling the memory unit 19 to store the broadcast program and the electronic program guide (EPG) among outputs from the demultiplexer 12, and outputting a control signal in response to a user's program guide screen request command; and a key input unit 17 for inputting a user's request command and commands associated with a variety of operations.

In operation, a transport stream selected by the tuner 11 is demultiplexed and separated into a video signal, an audio signal, and additional information using the demultiplexer 12. The additional information including program guide related information is stored in the memory unit 19 under control of the controller 18.

Subsequently, the video signal is processed by the video processor 15 so that the video signal may be displayed on a screen, and the audio signal is processed by the audio processor 13 so that the audio signal may be outputted using the speaker 14.

The controller 18 controls the memory unit 19 to store an EPG and controls the display unit 16 to display the EPG using an on screen display (OSD) screen when a user intends to view the EPG.

The controller 18 turns on the power of the image display device at the time when a program is broadcast and records the program when a user sets a reservation recording.

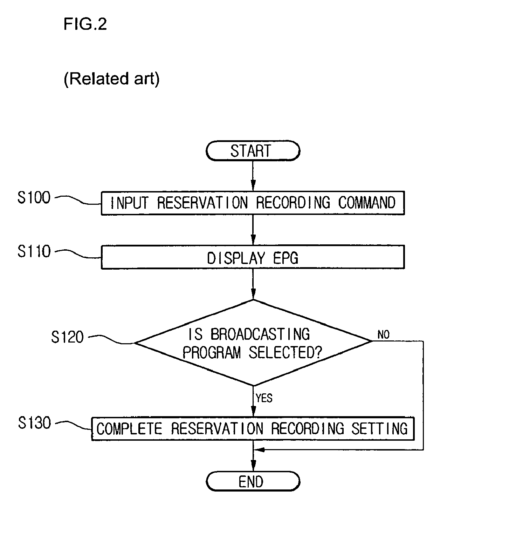

Fig. 2 is a flowchart illustrating a reservation recording method of the prior art image display device.

Reservation recording of the prior art image display device is started by the inputting of a reservation recording command by a user (S100).

When a user inputs a reservation recording command, an EPG is displayed (S110).

A user explores the EPG to select a desired broadcast program and complete reservation recording setting (S120 and 5130).

According to the prior art image display device, a user performs reservation recording of a broadcast program by selecting a broadcast program to be recorded using an EPG and making a reservation to record the program, or by making a reservation for a time and a channel in which the program is to be broadcast.

However, according to the prior art image display device, a user cannot easily record a broadcast program when a user intends to record a broadcast program currently being viewed from the beginning.

The present invention seeks to provide an improved image display device and reservation recording methods thereof.

Embodiments of the invention can provide apparatus and methods for easily recording a broadcast program when a user intends to record a broadcast program currently being viewed from the beginning.

According to a first aspect of the invention, there is provided an image display device including: a tuner for receiving a broadcast signal; a demultiplexer arranged to separate the broadcast signal into an audio signal, a video signal, and additional information; a video processor arranged to process the video signal separated by the demultiplexer; an audio processor arranged to process the audio signal separated by the demultiplexer; a display unit arranged to display an image using the video signal outputted from the video processor; a memory unit arranged to store the broadcast signal and an EPG; an EPG engine arranged to explore the EPG and performing reservation recording; a key input unit arranged to input a user's command; and a controller arranged to check whether rebroadcasting is scheduled in the EPG and to set reservation recording by controlling the EPG engine in response to a recording command, which is received from the key input unit, for a broadcast program being received.

According to another aspect of the present invention, there is provided a reservation recording method including: receiving a broadcast program; inputting a recording command for the broadcast program; exploring an EPG in response to the recording command to check whether rebroadcasting is scheduled in the EPG; and when rebroadcasting is scheduled in the EPG, setting reservation recording.

According to a further another aspect of the present invention, there is provided a reservation recording method including: receiving a broadcasting program; inputting a recording command for the broadcasting program; exploring an EPG in response to the recording command to check whether rebroadcasting is scheduled in the EPG; and when rebroadcasting is scheduled in the EPG, setting reservation recording, and when rebroadcasting is not scheduled in the EPG, downloading the broadcast program from a server through the Internet.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

Fig. 1 is a block diagram of a prior art image display device;

Fig. 2 is a flowchart of a prior art reservation recording method;

Fig. 3 is a block diagram of an image display device according to the present invention; and

Fig. 4 is a flowchart of a reservation recording method according to the present invention.

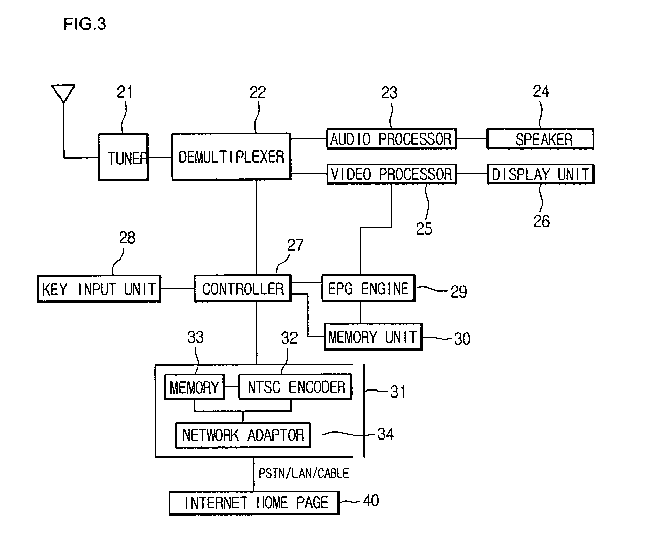

Referring to Fig. 3, an image display device includes:
a tuner 21 for selecting a broadcast signal; a demultiplexer 22 for separating the broadcast signal selected by the tuner 21 into an audio signal, a video signal, and additional information; a video processor 25 processing the video signal separated by the demultiplexer 22 so that the video signal may be outputted through the display unit 26; an audio processor 23 processing the audio signal separated by the demultiplexer 22 so that the audio signal may be outputted through the speaker 24; a memory unit 30 storing a broadcast program and an EPG; a controller 27 controlling the memory unit 30 to store a broadcast program and an EPG among outputs from the demultiplexer 22 and outputting a control signal in response to a user's recording command; an EPG engine 29 exploring an EPG stored in the memory unit 30 and performing reservation recording in response to a control signal from the controller 27; and a key input unit 28 inputting a user's request command and commands associated with a variety of operations.

Also, an Internet module 31 for accessing an Internet home page 40 to receive and store Internet information and converting the Internet information into a video signal and an audio signal is further provided.

In more detail, when a recording command for a broadcast program being viewed is inputted from the key input unit 28, the controller 27 controls the EPG engine 29 or the Internet module to operate.

The speaker 24 may be integrally formed with the image display device or may be separately provided.

When a user's recording command for a broadcast program being viewed is inputted, the EPG engine 29 explores the EPG stored in the memory unit 30 to check whether rebroadcasting is scheduled.

When rebroadcasting is scheduled in the EPG, the EPG engine 29 allows an OSD screen asking whether to set reservation recording to be displayed. When rebroadcasting is not scheduled, the EPG engine 29 displays that rebroadcasting is not scheduled using an OSD screen.

Also, the EPG engine 29 allows a recording command to be stored in the memory unit 30 when rebroadcasting is not scheduled and so the reservation recording setting cannot be performed. Also, when the EPG is updated, the EPG engine 29 checks whether rebroadcasting is scheduled in the EPG to set reservation recording.

In the present embodiment, the Internet module 31 has the ability to access the Internet home page through a public switched telephone network (PSTN), a local area network (LAN), and a CABLE, and may be used for recording a broadcast program currently viewed.

In the present embodiment the Internet module 31 includes a memory 33, an National Television System committee (NTSC) encoder 32, and a network adaptor 34. However, this is not essential. For example encoders for other television standards may be provided as required.

The network adaptor 34 allows the Internet module 31 to access a network, and a basic program and a variety of information are stored in the memory 33. The NTSC encoder 32 encodes video information of received Internet information using an NTSC method to process the video information so that the video information may be outputted to the image display device.

When a user's recording command for a broadcast program being viewed is inputted and rebroadcasting is not scheduled in an EPG, the controller 27 controls the Internet module 31 to access the Internet home page 40 to download the broadcast program being viewed therefrom.

The controller 27 controls the Internet module 31 to execute a web browser using the network adaptor 34 so as to access a server that stores the broadcast program such as a home page of a broadcasting station that provides a broadcast program being viewed. The controller 27 also controls the Internet module 31 to select a relevant broadcast program to download the same using information extracted from the EPG.

Also, the controller 27 analyzes a data format of the downloaded broadcast program and the relative position within one page of data, converts the broadcast program into pixel data with consideration of the output resolution and the number of colors of the image display device according to the analyzed results, and designates a memory address that corresponds to the position to be displayed on a screen to record the pixel data in the memory 33.

The NTSC encoder 32 converts each pixel data stored within the memory address 33 into a signal of three colors including red (R), green (G), and blue (B) while scanning the memory 33, allows the converted signal to be synchronized with a pixel clock, which is a synchronization clock used for displaying a signal on a screen, and inserts the converted signal into an NTSC video signal to convert the NTSC video signal into the NTSC signal.

As describe above, the broadcast program received through the Internet module 31 is stored in the memory unit 30.

In operation, a transport stream selected by the tuner 21 is demultiplexed and separated into a video signal, an audio signal, and additional information using the demultiplexer 22. The additional information including an EPG is stored in the memory unit 30 under control of the controller 27.

The video signal is processed by the video processor 25 so that the video signal may be outputted in the form of an image on the screen, and the audio signal is processed by the audio processor 23 so that the audio signal may be outputted through the speaker 24.

When a user inputs a recording command so as to record a broadcast program currently viewed while viewing a predetermined broadcast program, the controller 27 operates the EPG engine 29.

The EPG engine 29 explores the EPG stored in the memory unit 30 to check whether rebroadcasting for the relevant broadcast program is scheduled in the EPG.

Generally, since the broadcast program being viewed cannot be recorded from the beginning, it is possible to record the broadcast program being viewed from the beginning by making a reservation to record the broadcast program at a rebroadcasting time when the rebroadcast is scheduled in the EPG.

Here, rebroadcasting means that the same program is rebroadcast regardless of channels after a predetermined period of time elapses.

When rebroadcasting is not scheduled, the recording command is stored so that whether rebroadcasting is scheduled is explored and the reservation recording may be performed when the EPG is updated later.

The EPG engine 29 may allow an OSD screen that checks whether rebroadcasting is scheduled in the EPG and whether to perform the reservation recording when the rebroadcast program is scheduled in the EPG to be displayed.

Also, EPG engine 29 may be set to allow whether to record the broadcast program being viewed to be displayed using the OSD screen when the rebroadcast program is not scheduled in the EPG, and to record a partial portion of the broadcast program being viewed according to selection of a user.

When rebroadcasting the program is not scheduled in the EPG, it is possible to access the server that stores the broadcast program and download the broadcast program through the Internet module 31.

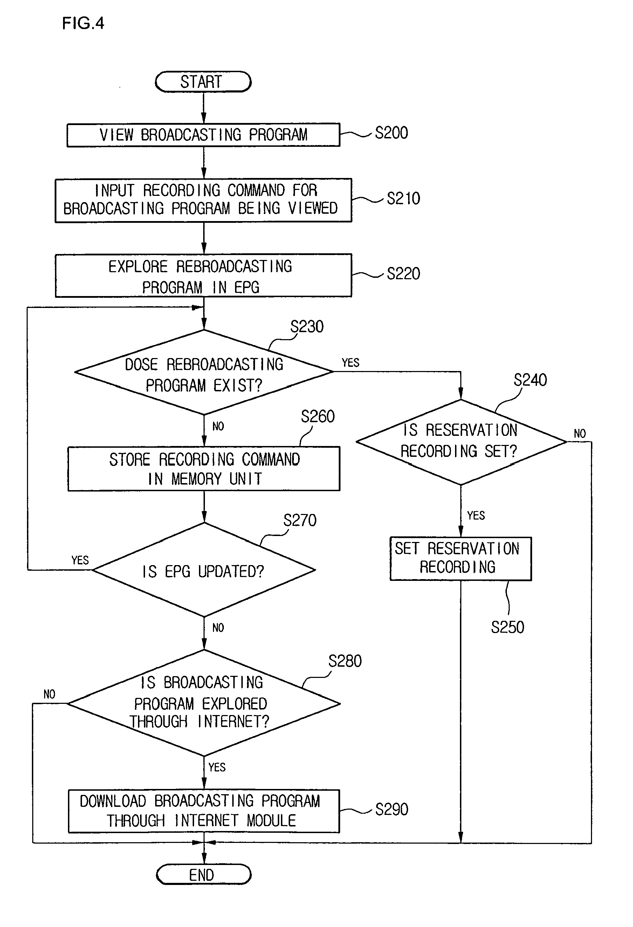

Fig. 4 is a flowchart of a reservation recording method according to the present invention.

First, when a recording command is inputted while a user views a predetermined broadcast program, a controller operates an EPG engine, which explores a stored EPG (S200, S210, and S220).

When rebroadcasting is scheduled as a result of the exploring of the EPG, the EPG engine generates an OSD screen that asks whether to record the rebroadcast, and sets reservation recording for the rebroadcast when a user approves the recording of the rebroadcast (S230, S240, and S250).

On the contrary, when rebroadcasting is not scheduled as a result of the exploring of the EPG, the recording command is stored in a memory unit (5260).

Also, when the EPG is updated, whether rebroadcasting is scheduled in the EPG is checked and reservation recording is performed (S270 and S230).

Also, when rebroadcasting is not scheduled in the EPG, it is possible to explore and download the broadcast program through the Internet (S280 and S290).

As described above, embodiments of the present invention can easily record the broadcast program currently viewed form the beginning.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image display device comprising:
a tuner for receiving a broadcast signal;
a demultiplexer arranged to separate the broadcast signal into an audio signal, a video signal, and additional information;
a video processor arranged to process the video signal separated by the demultiplexer;
an audio processor arranged to process the audio signal separated by the demultiplexer;
a display unit arranged to display an image using the video signal outputted from the video processor;
a memory unit arranged to store the broadcast signal and an EPG (electronic program guide);
an EPG engine arranged to explore the EPG and to perform a reservation recording;
a key input unit arranged to input a user's command; and
a controller arranged to check whether rebroadcasting is scheduled in the EPG and to set reservation recording by controlling the EPG engine in response to a recording command, which is received from the key input unit, for a broadcast program being received.

2. The device according to claim 1, wherein the EPG engine is arranged to check whether rebroadcasting is scheduled and to set reservation recording when the EPG is updated.

3. The device according to claim 1, wherein the EPG engine is arranged to allow an OSD (on screen display) screen to be displayed to check whether the rebroadcasting is scheduled in the EPG and whether to perform reservation recording when the rebroadcasting is scheduled.

4. The device according to claim 1, wherein when rebroadcasting the program is not scheduled in the EPG, the EPG engine is arranged to determine whether to record a currently viewed broadcast program and to record the broadcast program.

5. The device according to claim 1, further comprising an Internet module arranged to receive a broadcast program for which a recording command has been inputted through the Internet and to convert the broadcast program into an audio signal and a video signal under control of the controller.

6. The device according to claim 5, wherein the Internet module comprises:
a network adaptor arranged to access a network;
a memory arranged to store a broadcast program received through the network adaptor; and
an NTSC (National Television System Committee) encoder arranged to convert the broadcast program into the audio signal and the video signal so that the broadcast program is outputted.

7. A reservation recording method comprising:
receiving a broadcast program;
inputting a recording command for the broadcast program;
exploring an EPG in response to the recording command to check whether rebroadcasting is scheduled in the EPG; and
when rebroadcasting is scheduled in the EPG, setting reservation recording.

8. The method according to claim 7, further comprising, when rebroadcasting is not scheduled in the EPG, storing the recording command and checking whether rebroadcasting is scheduled in the EPG as the EPG is updated.

9. The method according to claim 7, wherein when rebroadcasting is not scheduled in the EPG, recording is performed for a partial portion of the broadcast program being received.

10. The method according to claim 7, further comprising exploring the EPG and providing whether rebroadcasting is scheduled using an OSD screen.

11. The method according to claim 7, further comprising asking whether to set reservation recording or to record a partial portion of the broadcast program using an OSD screen depending on whether rebroadcasting is scheduled in the EPG.

12. The method according to claim 7, further comprising, when rebroadcasting is not scheduled in the EPG, accessing the Internet to explore whether the same broadcast program exists.

13. The method according to claim 12, further comprising, when the same broadcast program exists as a result of accessing and exploring the Internet, downloading the broadcast program.

14. The method according to claim 13, wherein the downloaded broadcast program is encoded using an NTSC method.

15. A reservation recording method comprising:
receiving a broadcast program;
inputting a recording command for the broadcast program;
exploring an EPG in response to the recording command to check whether rebroadcasting is scheduled in the EPG; and
when rebroadcasting is scheduled in the EPG, setting reservation recording, and when rebroadcasting is not scheduled in the EPG, downloading the broadcast program from a server through the Internet.

16. The method according to claim 15, further comprising, when the EPG is updated, checking whether rebroadcasting is scheduled in the EPG and setting reservation recording again.

17. The method according to claim 15, further comprising exploring the EPG and providing whether rebroadcasting is scheduled using an OSD screen.

18. The method according to claim 15, further comprising, when rebroadcasting is not scheduled in the EPG or the broadcast program does not exist on the server, recording a partial portion of the broadcast program being received.

19. The method according to claim 18, further comprising, when rebroadcasting is not scheduled in the EPG or the broadcast program does not exist on the server, displaying whether to record a partial portion of the broadcast program being received using an OSD screen.
